(19) Europäisches Patentamt
European Patent Office
Office européen des brevets

(11) EP 1 642 623 A1

(12) **EUROPEAN PATENT APPLICATION**
published in accordance with Art. 158(3) EPC

(43) Date of publication:
**05.04.2006 Bulletin 2006/14**

(21) Application number: **04746899.6**

(22) Date of filing: **02.07.2004**

(51) Int Cl.:
***A63F 9/00*** (1968.09) ***A63F 13/12*** (2000.01)

(86) International application number:
**PCT/JP2004/009430**

(87) International publication number:
**WO 2005/002694 (13.01.2005 Gazette 2005/02)**

(84) Designated Contracting States:
**DE FR GB**

(30) Priority: **08.07.2003 JP 2003272075**

(71) Applicants:
- **Konami Corporation**
**Chiyoda-ku,**
**Tokyo 100-6330 (JP)**
- **Konami Computer Entertainment Studios, Inc.**
**Tokyo 106-6113 (JP)**

(72) Inventor: **Mori, Shoji**
**Konami Comp. Entertain. Studios Inc.**
**Tokyo 106-6113 (JP)**

(74) Representative: **Rüger, Barthelt & Abel**
**Patentanwälte**
**Webergasse 3**
**73728 Esslingen (DE)**

# (54) DISTRIBUTOR, DISTRIBUTING METHOD, PROGRAM AND INFORMATION RECORDING MEDIUM

(57) In order for a plurality of players to be matched and sorted into any of a plurality of classes depending on the matching results, in a sorting apparatus 101, a storage unit 103 stores players by sorting them into any of a plurality of classes, a matching unit 102 matches the players and makes the storage unit further store the matching results, an interchanging unit 104 checks the stored matching results in order to compare players who are sorted in the same class, and interchanges players between a higher class and a lower class, the storage unit 103 stores a handicap set for different classes, the matching unit 102 adopts the set handicap in a case where players sorted in different classes are to be matched, and a setting unit 105 updates the handicap in a manner to advantage the player who has achieved a lower result.

FIG.1

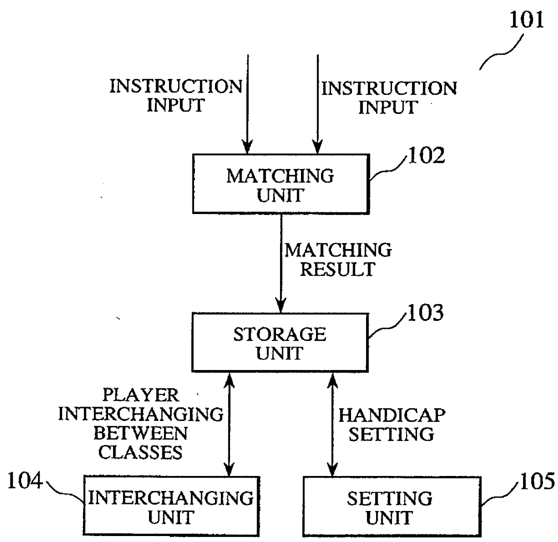


EP 1 642 623 A1

## Description

### Technical Field

The present invention relates to a sorting apparatus and sorting method suitable for sorting a plurality of players who have been matched into any one of a plurality of classes depending on scores they have achieved, a program for realizing these on a computer, and a computer-readable information recording medium storing the program.

### Background Art

Conventionally, for matching a plurality of players in games or sports, it has been a practice to balance each player's level of ability with that of the opponent to make the play more exciting and motivate both players. For example, such an approach has conventionally been employed as to classify a plurality of players (in case of a team play, each team is regarded as "player") into a plurality of classes in the order of ability levels (for example, they are classified into "first league" and "second league"), match them within each class to determine the intra-class order depending on the matching results, and interchange a player in an upper class who has gained a poor achievement with a player in a lower class who has gained a good achievement thereby to maintain the ability level in each class.

In the network games utilizing a computer communication network, abilities of players greatly vary depending on when they started playing the game or how many times they have spent on playing the game. If the ability level of a beginner is way behind that of his/her opponent who is matched with him/her when he/she begins playing the game, he/she might lose interest in the game.

However, even after players are classified based on their ability, one may not be able to find his/her match who is classified into the same class, depending on the time he/she plays the game. In conventional match-up games or sports in which each player is matched with another player, if players in different classes are matched, the player in the upper class may often be handicapped. In conventional games or sports, the participants or organizer of the games or sports set such handicaps beforehand.

### Disclosure of Invention

### Problem to be Solved by the Invention

In this context, there is a demand for a technique for appropriately classifying players even if there are great differences in the ability of players, in order to match players having as close ability level as possible. On the other hand, there is a demand for a technique for appropriately adjusting handicaps in a case where players from different classes are matched. Particularly, in network match-up games in which players with various ability levels frequently repeat joining and leaving the play, there is a great demand for such techniques for classifying the players and automatically adjusting handicaps.

An object of the present invention is to provide a sorting apparatus and sorting method suitable for matching a plurality of players and sorting the players into any one of a plurality of classes depending on the matching results, a program for realizing these on a computer, and a computer-readable information recording medium storing the program.

### Means for Solving the Problem

To achieve the above object, the following invention will be disclosed in accordance with the principle of the present invention.

A sorting apparatus according to a first aspect of the present invention comprises a storage unit, a matching unit, an interchanging unit, and a setting unit, which are configured as follows.

The storage unit stores a plurality of players by sorting them into any of a plurality of classes which are ranked in an order of a higher class to a lower class. Accordingly, each player is sorted into any of the classes depending on his/her ability level, and the storage unit stores the association of each player with a class.

Further, the storage unit stores a handicap set for different classes among the plurality of classes. That is, in consideration of a case where a player in a higher class and a player in a lower class are matched, a handicap that is disadvantageous to the upper class and advantageous to the lower class is set beforehand. Since this handicap is automatically adjusted, an arbitrary initial value may be set as the handicap for the time being.

The matching unit receives an instruction from a player and an instruction from another player, matches the players with each other in accordance with the received instructions, and makes the storage unit further store a matching result of this match. By giving an instruction, each player is matched with another player. In a network match-up game utilizing a server, typically, each player gives an instruction to the controller of his/her own game apparatus, which then sends the instruction to the server via a computer communication network, and the server controls a character in the game operated by the player (such a character will timely be referred to as "PC (Player Character)") to exhibit various behaviors in accordance with the instruction, and matches characters.

In a case where players sorted in different classes are to be matched, the matching unit adopts the stored handicap set for the different classes. Even if players sorted in different classes are to play a match, it is possible to make them play the match by adjusting their ability levels by providing a handicap.

The interchanging unit checks stored matching results in order to compare players who are sorted in a same class, and updates the storage unit by re-sorting a player who has achieved a higher result into a class which is higher than a current class, and re-sorting a player who has achieved a lower result into a class which is lower than a current class. In a sport, it is a practice to hold matches for interchanging players between a higher league and a lower league and to interchange a player achieving a low result in the upper league with a player achieving a high result in the lower league. The interchanging unit performs the same process as this.

Typically, players' ranks in each class are determined depending on "matching results, among matching results, that concern matches between players sorted in the same class". However, in a case where handicap matches to be described later are adopted, player's ranks in each class may be determined by referring to "a winning percentage in matches most recently held" as matching results.

The setting unit updates the handicap set for the different classes based on the stored matching result, in a manner to advantage a class which has achieved a lower matching result than that of the other class.

According to the present invention, it is possible to match a plurality of players and sort them into any of a plurality of classes depending on matching results of the players thereby to keep the ability levels of the players in the same class as close as possible to each other, and at the same time, to appropriately adjust a handicap in a case where players sorted in different classes are to be matched.

In the sorting apparatus according to the present invention, the setting unit may update the handicap set for the different classes, each time imbalance of matching results obtained after players sorted in these different classes are matched with adoption of the handicap exceeds a predetermined threshold.

For example, in a case where an appropriate handicap is applied, even in case of matches between different classes, the winning percentage of each class should be 50 percent. Hence, the setting unit monitors the results of handicapped matches held between different classes, and in a case where there is imbalance in the winning percentages of a class and another class, corrects the handicap so as to disadvantage the class having a higher winning percentage and advantage the class having a lower winning percentage.

According to the present invention, it is possible to automatically adjust the handicap which is adopted in a case where players sorted in different classes are to be matched.

The sorting apparatus of the present invention may further comprise an imitating unit, a matching unit, and a sorting unit, which may be configured as follows.

The imitating unit generates an instruction. Normally, an instruction is generated by a human player by thinking by his/her head or in accordance with his/her reflexes. Hence, in order to imitate a human player, an information processing apparatus such as a computer functions as the imitating unit by generating an instruction in accordance with a predetermined algorithm.

In a case where a predetermined player among the plurality of players (the predetermined player will hereinafter be referred to as "simulated player") is set to be one party of a match, the matching unit receives an instruction generated by the imitating unit as an instruction from the simulated player. Accordingly, in a case where a player cannot find a human player as an opponent to be matched or wants to do some practice, the player can play a match against a simulated player which imitates a human player (hereinafter, a simulated player will timely be referred to as "NPC (Non-Player Character)").

The sorting unit makes the matching unit match a player who has not yet been sorted into any class (such a player will hereinafter be referred to as "new player") with a simulated player, and updates the storage unit by sorting the new player into any class depending on a matching result of the match. A new player is a player who joins the match-up game for the first time. Therefore, the new player's ability level is unknown, and the new player might lose interest in the game if he/she is matched with an existing player because there might possibly be a great difference between their ability levels and this would reduce the excitement that the game would provide to the player.

According to the present invention, by matching a simulated player with a new player, it is possible to prevent this problem from occurring in a match with an existing player. Since a simulated player is not a human opponent, a new player can join the game with an easy mind. And since the new player can be sorted into a class that corresponds to his/her ability level, it is possible to keep the new player excited and interested by/in the game.

It is preferred that the technique for automatically adjusting handicaps and the technique for determining the class into which a new player is to be sorted by using a simulated player be both employed. However, only either one of them may be employed.

In the sorting apparatus according to the present invention, the imitating unit may be configured to generate the instruction by using plural kinds of algorithms provided thereto, the matching unit may be configured to, in a case where one of a plurality of simulated players is set to be one party of a match, receive an instruction generated by the imitating unit's using one kind of algorithms that is pre-associated with the simulated player, as an instruction from the simulated player, and the sorting unit may be configured to match a new player with a plurality of simulated players, and determine a class into which the new player is to be sorted depending on obtained matching results.

Generally, behaviors ofNPCs are varied by a plurality of algorithms. For example, there are algorithms for mainly attacking behaviors, algorithms for mainly defending behaviors, algorithms for half attacking and half defending, etc. Further, various parameters such as height, weight, moving speed, intensity of attacking, defending power, etc. are assigned to each NPC. According to the present invention, the class into which a new player is to be sorted is determined by matching the new player with a plurality of NPCs which are different in these parameters.

According to the present invention, the class into which the new player is to be sorted is determined through matches with a plurality of different kinds of NPCs. Therefore, it is possible to more appropriately determine the class into which the new player is to be sorted.

In the sorting apparatus according to the present invention, when a new player is matched with a simulated player and in a case where, in a matching result of this match,

(a) the new player is higher than the simulated player, the sorting unit may be configured to select a simulated player who is sorted in a class higher than a class of the matched simulated player as a next match,

(b) the new player is lower than the simulated player, the sorting unit may be configured to select a simulated player who is sorted in a class lower than a class of the matched simulated player as a next match,

and the sorting unit may be configured to repeat this matching and selecting process a predetermined number of times, and determine a class into which the new player is to be sorted depending on a matching result of a match with the last simulated player.

That is, the class into which the new player is to be sorted is determined by ranking the NPCs depending on their achievements. For example, a method for selecting a class which is ranked at the middlemost position as the initial value representing the class into which a new player should be sorted, and then performing a dichotomizing search may be employed.

According to the present invention, in a case where a new player is to be matched with a plurality of simulated players, the new player can be sorted into a class that corresponds to his/her ability level by playing as less a number of matches as possible.

In the sorting apparatus according to the present invention, in a case where a new algorithm which is different from any of the plural kinds of algorithms is provided to the imitating unit, the sorting unit may be configured to regard a simulated player who is associated with this new algorithm as a new player and determine a class into which this new player is to be sorted.

According to the above-described invention, it has been explained that a new player is a human player. However, a new player may be an NPC, in such a case where an NPC which acts in accordance with a new algorithm or an NPC having changed parameters is to be entered in the game.

According to the present invention, it is also possible to sort a new NPC into any class by matching the new NPC with existing NPCs.

In the sorting apparatus according to the present invention, each algorithm to be provided to the imitating unit may be configured to generate a fixed instruction depending on each of different numerical parameters, the imitating unit may be configured to, in a case where there is any class in which no simulated player is sorted, be provided with an algorithm which is defined based on a numerical parameter which internally divides a numerical parameter for a simulated player who is sorted into a class higher than the class and a numerical parameter for a simulated player who is sorted into a class lower than the class, and the sorting unit may be configured to regard a simulated player associated with this algorithm as a new player, and determine a class into which the new player is to be sorted.

Generally, in a match-up game, a match "without any handicap" in which one is matched with an opponent having the same ability level is often requested. Therefore, it is preferred that at least one simulated player belong to each class.

In a case where different numerical parameters are provided to NPCs which are run on a common algorithm and as a result the NPCs are sorted into different classes, it is expected that another NPC which is given the average of these numerical parameters will be sorted into a class which is between these classes. Averaging corresponds to internal dividing at a ratio 1:1. Therefore, if the sum of the parameters is internally divided at a different ratio, the NPC given such an internal division result as a parameter is expected to be sorted into a class corresponding to the internal division ratio.

Therefore, in case of generating an NPC by providing various parameters, it is possible to provide as appropriate parameters as possible thereby to efficiently sort a simulated player into a class in which no simulated player has been sorted.

The sorting apparatus according to the present invention may further comprise a setting unit. The setting unit may be configured to make the matching unit match simulated players sorted in different classes, and to set a handicap for the different classes depending on a matching result of the match, and in a case where the matching unit matches players who are sorted in different classes and at least one of who is not a simulated player, the matching unit may be configured to adopt a handicap set for the different classes by the setting unit.

According to the above-described invention, it has been explained that a handicap is adjusted based on results of past (recent) handicap matches held between players sorted in different classes. However, according to the present invention, this adjustment is made based on matches between NPCs. Matches between NPCs can be executed during an appropriate free time such as an idle time of a server apparatus.

Therefore, according to the present invention, even in a case where there are not many results accumulated as matching results of matches held between human players sorted in different classes, it is possible to enter NPCs in matches in place of human players and to re-set the handicap which has been set for the different classes.

A sorting method according to another aspect of the present invention involves use of a storage unit which stores a plurality of players by sorting them into any of a plurality of classes which are ranked in an order of a higher class to a lower class and also stores a handicap set for different classes among the plurality of classes, and comprises a matching step, an interchanging step, and a setting step, which are configured as follows.

In the matching step, an instruction from a player and an instruction from another player are received, and these players are matched with each other in accordance with the received instructions, and a matching result of this match is further stored in the storage unit.

In the interchanging step, among stored matching results, matching results of players sorted in a same class are compared, and the storage unit is updated such that a player who has achieved a higher result is re-sorted into a class higher than a current class and a player who has achieved a lower result is re-sorted into a class lower than the current class.

In the matching step, in a case where players sorted in different classes are to be matched, the stored handicap set for the different classes is adopted.

In the setting step, the handicap set for the different classes is updated based on the stored matching result, in a manner to advantage a class which has achieved a lower matching result than that of the other class.

A sorting method according to another aspect of the present invention involves use of a storage unit which stores a plurality of players by sorting them into any of a plurality of classes which are ranked in an order of a higher class to a lower class, and comprises a matching step, an interchanging step, an imitating step, and a sorting step which are configured as follows.

In the matching step, an instruction from a player and an instruction from another player are received, these players are matched with each other in accordance with these instructions, and a matching result of this match is further stored in the storage unit.

In the interchanging step, among stored matching results, matching results of players sorted in a same class are compared, and the storage unit is updated such that a player who has achieved a higher result is re-sorted into a class higher than a current class, and a player who has achieved a lower result is re-sorted into a class lower than the current class.

In the imitating step, an instruction is generated.

In the matching step, in a case where a predetermined player among the plurality of players (the predetermined player will hereinafter be referred to as "simulated player") is set to be one party of a match, an instruction generated by the imitating unit is received as an instruction from the simulated player.

In the sorting step, a player who has not yet been sorted into any class (such a player will hereinafter be referred to as "new player") is matched with a simulated player in the matching step, and the storage unit is updated such that the new player is sorted in any class depending on a matching result of this match.

A program according to another aspect of the present invention is configured to control a computer to function as the above-described display apparatus or control a computer to execute the above-described display method. The program according to the present invention may be recorded on a computer-readable information recording medium such as a compact disk, a flexible disk, a hard disk, a magneto-optical disk, a digital video disk, a magnetic tape, a semiconductor memory, etc. This program may be distributed or sold through a computer communication network, separately from a computer in which this program is to be activated. The above-described information recording medium may be distributed or sold separately from a computer.

## Effects of the Invention

According to the present invention, it is possible to provide a sorting apparatus and sorting method suitable for matching a plurality of players and sorting the players into any one of a plurality of classes depending on the matching results, a program for realizing these on a computer, and a computer-readable information recording medium storing the program.

Brief Description of Drawings

[FIG. 1] FIG. 1 is an exemplary diagram showing a schematic configuration of a sorting apparatus according to a first embodiment of the present invention;
[FIG. 2] FIG. 2 is an explanatory diagram showing information stored in a storage unit of the sorting apparatus according to the embodiment;
[FIG. 3] FIG. 3 is a flowchart showing a flow of a process of a sorting method executed by the sorting apparatus according to the embodiment; and
[FIG. 4] FIG. 4 is an exemplary diagram showing a schematic configuration of a sorting apparatus according to a second embodiment of the present invention.

Explanation of Reference Numerals

| | |
|---|---|
| 101 | sorting apparatus |
| 102 | matching unit |
| 103 | storage unit |
| 104 | interchanging unit |
| 105 | setting unit |
| 401 | imitating unit |
| 402 | sorting unit |

Best Mode for Carrying Out the Invention

An embodiment of the present invention will now be explained below. For facilitating understanding, an embodiment where the present invention is applied to a server apparatus of a network match-up game will be explained. However; the present invention can likewise be applied to information processing apparatuses such as various kinds of computers, PDAs (personal Data Assistants), portable phones, etc. That is, the embodiment to be explained below is intended for explanation, but not intended for restricting the scope of the present invention. Therefore, even if a person skilled in the art can employ an embodiment in which some or all of the components of the present embodiment are replaced with equivalents of those, such an embodiment is also regarded to be included in the scope of the present invention.

Embodiment 1

FIG. 1 is an exemplary diagram showing a schematic configuration of a sorting apparatus according to a first embodiment of the present invention. The following explanation will be made with reference to FIG. 1.
The sorting apparatus 101 according to the present embodiment comprises a matching unit 102, a storage unit 103, an interchanging unit 104, and a setting unit 105.
The storage unit 103 stores a plurality of players by classifying them into any of a plurality of classes ranging from the upper level to the lower level. The storage unit 103 stores handicaps set for different classes among the plurality of classes.
Accordingly, in a case where the sorting apparatus 101 is realized on a computer, a storage medium such as a RAM (Random Access Memory), a hard disk, etc. functions as the storage unit 103.
FIG. 2 is an explanatory diagram showing information stored in the storage unit 103. The following explanation will be made with reference to FIG. 2.
In a score table in the storage unit 103, an ID (IDentifier) number of each player, the current class of the player, and the latest win-loss record are stored in association with one another. For example, the latest win-loss record of a player A in the class 2 is 19 wins and 12 losses, and the latest win-loss record of a player B in the class 3 is 17 wins and 12 losses.
In a handicap table in the storage unit 103, handicaps set between different classes are stored while being organized in a triangle structure. No handicap is necessary in case of a match in the same class. Therefore, if there are "n" number of classes, "$n \times (n-1)/2$" number of handicaps are stored in this triangle table. In this triangle table, integers that make the player in the upper class disadvantaged over the player in the lower class are stored as handicaps.

In addition to the handicap, in each data element of the triangle table in the storage unit 103, the result of matches held after the current handicap is set between players in the two classes in question is stored.

According to FIG. 2, for example, the handicap between the upper class 2 and the lower class 3 is 2.800, and their matching result is 43 wins by the players in the class 2 and 62 wins by the players in the class 3.

FIG. 3 is a flowchart showing the flow of a process of a sorting method executed by the sorting apparatus 101. The following explanation will be made with reference to FIG. 3.

First, the matching unit 102 receives an instruction input from a player and an instruction input from another player, and matches them in response to these instruction inputs (step S301). In this case, if the players from different classes are to be matched with each other, the matching unit 102 refers to the handicap table stored in the storage unit 103 and adopts the handicap set between the different classes.

Accordingly, in a case where the sorting apparatus 101 is realized on a computer, the matching unit 102 is realized by cooperation of various kinds of hardware under the control of a CPU (Central Processing Unit), such as for receiving an instruction from a player via a keyboard, a mouse, or various types of game controllers, displaying a status of a game on the screen of a television apparatus or the like, outputting a sound from a speaker, etc. As will be described later, the matching unit may be adapted to accept two type of players, namely a human player and an NPC generated by a computer simulating behaviors of a human.

Here, a case where a player A in the class 2 is matched with a player B in the class 3 will be considered.

The matching unit 102 writes the result of this match in the handicap table stored in the storage unit 103 to update the table (step S302). For example, assume that the player A in the class 2 and the player B in the class 3 are matched in step S301 with a handicap 2.800 and the player B in the class 3 wins. In this case, the corresponding element of the handicap table is updated to "handicap 2.800, 43 wins by players in the class 2, 63 wins by players in the class 3".

Then, the matching unit 102 updates the score table by writing the matching result in the score table (step S303). In this case, the latest win-loss record of the player A in the class 2 is updated to 19 wins and 13 losses, and the latest win-loss record of the player B in the class 3 is updated to 18 wins and 12 losses.

Accordingly, in a case where the sorting apparatus 101 is realized on a computer, the setting unit 105 is realized by the CPU cooperating with a storage device such as a RAM, etc.

The setting unit 105 checks the updated element of the handicap table to see whether there is any imbalance in the matching result (step S304). In a case where there is no imbalance (step S304; No), the flow goes to step S311.

Whether there is any imbalance or not is determined in the following manner.

(a) If the total number of matches held on the handicap in question (in this case, 43+63 = 106) does not exceed a predetermined threshold match number, it is determined that there is no imbalance.

(b) If the total number exceeds the predetermined threshold match number, but the difference between matching results (in this case, |143-63| = 20) does not exceed a predetermined threshold difference, it is determined that there is no imbalance.

(c) If neither of the above (a) nor (b) is satisfied, it is determined that there is imbalance.

In a case where there is imbalance (step S304; Yes), the setting unit 105 corrects the handicap in such a direction as to cancel the imbalance (step S305). In this example, since the handicap 2.800 results in too many wins by the players in the lower class, this handicap should be reduced. This means that the handicap will be updated such that the players in the upper class, who have got the poor achievement, will be advantaged.

The correction degree for correcting the handicap in a direction to cancel the imbalance varies according to the kinds of match-up games. Most simply, an adequate correction degree may be set beforehand (for example, "0.1") and the handicap may be corrected by this correction degree.

As a more sophisticated manner, a plural number of latest pairs of a handicap value and matching result imbalance may be stored as logs, and such a new handicap value as to give an even chance of winning to both sides may be calculated by interpolating/extrapolating the logs.

For example, consider a case where the current handicap is 2.800 and the current matching result is 43 wins to 63 wins (though in FIG. 2, these are 2.800, and 43 wins to 62 wins respectively, consider the situation after the aforementioned match is held), and a former handicap is 2.200 and a corresponding former matching result is 72 wins to 34 wins. In this case, if the handicap to be calculated is assumed to be "h", interpolation/extrapolation is performed with a ratio of

$$\text{“}2.800-h:h-2.200 = 63/43-1:1-34/72\text{”}.$$

In this case, the value of "h" obtained is about 2.519. Thus, this value will be adopted as the next handicap value. Various other techniques may be employed for performing interpolation/extrapolation.

When the handicap is corrected, the setting unit 105 erases the matching result in question (step S306) and the flow goes to step S311. Through step S305 and step S306, the handicap and matching result concerning the upper class 2 and the lower class 3 stored in the handicap table in the storage unit 103 are updated to 2.519, 0 win by the players in the class 2, and 0 win by the players in the class 3, respectively.

Accordingly, in a case where the sorting apparatus 101 is realized on a computer, the setting unit 105 is realized by the CPU cooperating with a storage device such as a RAM, etc.

Next, the interchanging unit 104 checks whether an arbitrarily set interchanging condition is satisfied or not such as whether the total number of matches held after the last interchange took place exceeds a predetermined number, or whether the date set for performing interchange comes, etc. (step S311). In a case where the interchanging condition is not satisfied (step S311; No), the flow returns to step S301.

To the contrary, in a case where the interchanging condition is satisfied (step S311; Yes), the interchanging unit 104 ranks the players in each class in the order of achievements they have got (step S312). The manner of ranking is arbitrary: the players may be ranked depending simply on their winning percentage; in a case where players have not done equal to or more than a predetermined number of matches, they may be rated as poorer achievement holders as the number of matches they have done is smaller; the number of matches and the numbers of wins and losses may be given to a predetermined evaluation function to derive an adequate value and rank the players based on the derived value.

The interchanging unit 104 interchanges players by transferring the worst player in each class to a lower class and transferring the best player in each class to a higher class (step S313).

The number of players to be interchanged may be most simply be determined by presetting the number of players to be transferred to a higher class or a lower class to "a predetermined number of players from each class". Or, adequate percentages may be fixed as constants such that the "XX" percent from the top may be transferred to a higher class and the "YY" percent from the bottom may be transferred to a lower class.

At the time of interchanging, the upper limit of the number of classes may be set beforehand, and the best player in the uppermost class and the worst player in the lowermost class may be made to remain in the classes they have been in. In a case where the number of players belonging to the uppermost class or to the lowermost class exceeds a predetermined number, a new upper class or a new lower class may be produced and these players may be transferred to the newly produced class.

Further, such a manner of adequately changing the number of classes may be employed, as to make the number of classes proportional to the number of players currently participating in match-up games.

Accordingly, in a case where the sorting apparatus 101 is realized on a computer, the interchanging unit 104 is realized by the CPU cooperating with a storage device such as a RAM, etc.

After the interchanging is performed, the win-loss record of each player is erased (step S314) and the flow returns to step S301.

According to the present embodiment, it is possible to sort players into a plurality of classes depending on their ability levels and to automatically adjust the handicaps so that even players from different classes can have as even a match as possible.

Embodiment 2

The above-described embodiment is based on a premise that a human player is matched with another human player. Meanwhile, in a case where a human player cannot find a human opponent or a human player wants to practice, currently available match-up games widely employ a system for letting a human player input an instruction and control a PC while a computer imitates a human to generate an instruction and control an NPC, thereby to match the PC with the NPC. The present embodiment corresponds to such a system.

As shown in FIG. 4, the sorting apparatus according to the present embodiment further comprises an imitating unit 401 and a sorting unit 402, as compared with the sorting apparatus 101 of the above-described embodiment.

The imitating unit 401 generates an instruction as if a human player were doing so (generates an instruction by a "simulated player") by controlling a computer to execute a predetermined program, and provides the generated instruction to the matching unit 102. Because of this, a match between PCs (a match between human players), a match between an NPC and a PC (a match between a computer and a human player), and a match between NPCs (a match between computers (instruction generation programs)) become available. By adequately entering NPCs into the matches, shuffling of the players is promoted in each class and NPCs are sorted into any of the classes depending on their achievements likewise the PCs.

Accordingly, the imitating unit 401 can be realized by controlling a CPU of a computer to execute a predetermined program.

The sorting unit 402 gives, in a case where an instruction provided to the matching unit 102 is from a player who has not yet been sorted into any class (such a player will hereinafter be referred to as "new player"), an instruction generated by the imitating unit 401 as an instruction from the opponent of the new player, thereby to match the new player with a simulated player.

Depending on the result of the match, the sorting unit 402 sorts the new player into a class. Various techniques are available as the sorting method. In a case where there is only one simulated player (in a case where there is only one kind of instruction generation program to be run by the imitating unit 401), the simplest sorting method is to sort the new player into a class higher by one level than the class to which the simulated player belongs in a case where the new player defeats the simulated player, and to sort the new player into a class lower by one level than the class to which the simulated player belongs in a case where the new player is defeated by the simulated player. The new player may not be sorted into an adjacent class, but may be sorted into a class apart from the class of the simulated player by a predetermined number.

In another case where there are a plurality of simulated players, these simulated players are ranked depending on their achievements and a simulated player with a mid-class achievement is first matched with the new player. In a case where the new player wins this match, the new player is then matched with a simulated player who is ranked between the most highly ranked simulated player and the simulated player with the mid-class achievement. Likewise, after this, by matching the new player with a predetermined number of simulated players in such a dichotomizing search manner as described above, it is possible to narrow down the class into which the new player should be sorted.

The sorting unit 402 may be programmed to match a new player with a simulated player, and if as a result,

(a) the new player defeats the simulated player, the sorting unit 402 may select a simulated player sorted into a class higher than the class of the defeated simulated player as the next match,
(b) the new player is defeated by the simulated player, the sorting unit 402 may select a simulated player sorted into a class lower than the class of the winning simulated player as the next match, and repeat this process a predetermined number of times, and determine the class into which the new player is to be sorted depending on the result of a match with a simulated player who fights with the new player last.

That is, NPCs are ranked depending on their achievements in order to determine the class into which the new player is to be sorted. For example, such a manner may be employed as to adopt the midmost class as the initial value representing the class into which the new player should be sorted, and then conduct a dichotomizing search. According to the present invention, in a case where a new player is matched with a plurality of simulated players, the new player can be sorted into a class suitable for his/her ability level by playing as less a number of matches as possible.

The new player may not be a human player, but may be a simulated player associated with a new instruction generation program. In this case, the first class of the NPC new player is determined based on a match between NPCs.

In a case where the class of a new player is determined in such a dichotomizing search manner as described above, it is preferred that at least one NPC be sorted in each class. In a match-up game, a match with "no handicap" in which one is matched with an opponent having the same ability level is often requested. Therefore, it is preferred that at least one simulated player belong to each class.

In a case where different numerical parameters are provided to NPCs which are run on a common algorithm and as a result the NPCs are sorted into different classes, it is expected that another NPC which is given the average of these numerical parameters will be sorted into a class which is between these classes. Averaging corresponds to internal dividing at a ratio 1:1. Therefore, if the sum of the parameters is internally divided at a different ratio, the NPC given such an internal division result as a parameter is expected to be sorted into a class corresponding to the internal division ratio.

For example, in a case where an NPC which is run by providing a parameter (a, b) to a given program belongs to a class "p" and an NPC which is run by providing a parameter (x, y) to the same program belongs to a class "q", the parameter having a high probability of making an NPC belong to a class "r" is a parameter which is obtained by internally dividing these parameters, namely

$$(((r-q)a+(p-r)x)/(p+q),\ (r-q)b+(p-r)y/(p+q)).$$

A new simulated player obtained by providing this parameter to the same program is entered into matches.

If a simulated player becomes sorted in every class by promoting matches, there is no need of deriving a new parameter. However, if there occurs any class in which no simulated player is sorted, a new simulated player is generated based on existing simulated players by following the same process as described above.

Matches between NPCs can be executed in the absence of human players. Therefore, if matches between NPCs are executed many times during an appropriate free time such as an idle time of the server apparatus, shuffling in each class is promoted and handicaps between different classes are automatically adjusted.

By a computer executing a program for realizing a predetermined algorithm thereby to generate an instruction as if it were given by a human player, it is possible to enter NPCs into matches. As a result, it is possible to obtain effects of appropriately sorting a new player into his/her initial class and of automatically adjusting handicaps between different classes even if there are no matches played by human players.

Industrial Applicability

As explained above, according to the present invention, it is possible to provide a sorting apparatus and sorting method suitable for matching a plurality of players and sorting the players into any one of a plurality of classes depending on the matching results, a program for realizing these on a computer, and a computer-readable information recording medium storing the program. These can be applied to realization of various match-up game systems or the like.

## Claims

**1.** A sorting apparatus comprising:

a storage unit which stores a plurality of players by sorting them into any of a plurality of classes which are ranked in an order of a higher class to a lower class;
a matching unit which receives an instruction from a player and an instruction from another player, matches the players with each other in accordance with the received instructions, and makes said storage unit further store a matching result of this match; and
an interchanging unit which checks the stored matching result in order to compare players who are sorted in a same class, and updates said storage unit by re-sorting a player who has achieved a higher result into a class which is higher than a current class, and re-sorting a player who has achieved a lower result into a class which is lower than the current class, wherein
said storage unit further stores a handicap set for different classes among the plurality of classes;
in a case where players sorted in different classes are to be matched, said matching unit adopts the stored handicap set for the different classes; and
said sorting apparatus further comprises a setting unit which updates the handicap set for the different classes based on the stored matching result, in a manner to advantage a class which has achieved a lower matching result than that of the other class.

**2.** The sorting apparatus according to claim 1, wherein
said setting unit updates the handicap set for the different classes, each time imbalance of matching results obtained after players sorted in these different classes are matched with adoption of the handicap exceeds a predetermined threshold.

**3.** The sorting apparatus according to claim 1, further comprising:

an imitating unit which generates an instruction which is to be provided to said matching unit and which imitates an instruction given by a human player;
a matching unit which, in a case where a predetermined player among the plurality of players (the predetermined player will hereinafter be referred to as "simulated player") is set to be one party of a match, receives an instruction generated by said imitating unit as an instruction from the simulated player; and
a sorting unit which makes said matching unit match a player who has not yet been sorted into any class (such a player will hereinafter be referred to as "new player") with a simulated player, and updates said storage unit by sorting the new player into any class depending on a matching result of the match.

**4.** A sorting apparatus comprising:

a storage unit which stores a plurality of players by sorting them into any of a plurality of classes which are ranked in an order of a higher class to a lower class;
a matching unit which receives an instruction from a player and an instruction from another player, matches the players with each other in accordance with the received instructions, and makes said storage unit further store a matching result of the match;
an interchanging unit which checks the stored matching result in order to compare players who are sorted in a same class, and updates said storage unit by re-sorting a player who has achieved a higher result into a class which is higher than a current class, and re-sorting a player who has achieved a lower result into a class which is lower than the current class;
an imitating unit which generates an instruction which is to be provided to said matching unit and which imitates an instruction given by a human player;
a matching unit which, in a case where a predetermined player among the plurality of players (the predetermined player will hereinafter be referred to as "simulated player") is set to be one party of a match, receives an instruction generated by said imitating unit as an instruction from the simulated player; and
a sorting unit which makes said matching unit match a player who has not yet been sorted into any class (such a player will hereinafter be referred to as "new player") with a simulated player, and updates said storage unit by sorting the new player into any class depending on a matching result of the match.

**5.** The sorting apparatus according to claim 4, wherein:

said imitating unit generates the instruction by using plural kinds of algorithms provided thereto;
in a case where one of a plurality of simulated players is set to be one party of a match, said matching unit receives an instruction generated by said imitating unit by using one kind of algorithms that is pre-associated with the simulated player, as an instruction from the simulated player; and
said sorting unit matches a new player with a plurality of simulated players, and determines a class into which the new player is to be sorted depending on obtained matching results.

**6.** The sorting apparatus according to claim 5, wherein
said sorting unit matches a new player with a simulated player, and in a case where, in a matching result of this match,

(a) the new player is higher than the simulated player, selects a simulated player who is sorted in a class higher than a class of the matched simulated player as a next match,
(b) the new player is lower than the simulated player, selects a simulated player who is sorted in a class lower than the class of the matched simulated player as a next match,

and repeats this matching and selecting process a predetermined number of times, and determines a class into which the new player is to be sorted depending on a matching result of a last match held between the new player and a simulated player.

**7.** The sorting apparatus according to claim 6, wherein
in a case where a new algorithm which is different from any of the plural kinds of algorithms is provided to said imitating unit, said sorting unit regards a simulated player who is associated with this new algorithm as a new player and determines a class into which this new player is to be sorted.

**8.** The sorting apparatus according to claim 7, wherein:

each algorithm to be provided to said imitating unit generates a fixed instruction depending on each of different numerical parameters;
in a case where there is any class in which no simulated player is sorted, said imitating unit is provided with an algorithm which is defined based on a numerical parameter which internally divides a numerical parameter for a simulated player who is sorted into a class higher than the class and a numerical parameter for a simulated player who is sorted into a class lower than the class; and
said sorting unit regards a simulated player associated with the algorithm as a new player, and determines a class into which the new player is to be sorted.

**9.** The sorting apparatus according to claim 8, further comprising a setting unit which makes said matching unit match simulated players sorted in different classes, and sets a handicap for the different classes depending on a matching result of the match, wherein
in a case where said matching unit matches players who are sorted in different classes and at least one of who is not a simulated player, said matching unit adopts a handicap set for the different classes by said setting unit.

**10.** A sorting method which involves use of a storage unit which stores a plurality of players by sorting them into any of a plurality of classes which are ranked in an order of a higher class to a lower class and also stores a handicap set for different classes among the plurality of classes, said method comprising:

a matching step of receiving an instruction from a player and an instruction from another player, matching these players with each other in accordance with the received instructions, and further storing a matching result of this match in said storage unit;
an interchanging step of checking the stored matching result in order to for players who are sorted in a same class to be compared with each other, and updating said storage unit such that a player who has achieved a higher result is re-sorted into a class higher than a current class and a player who has achieved a lower result is re-sorted into a class lower than the current class;
said matching step of, in a case where players sorted in different classes are to be matched, adopting the stored handicap set for the different classes; and
a setting step of updating the handicap set for the different classes based on the stored matching result, in a manner to advantage a class which has achieved a lower matching result than that of the other class.

**11.** A sorting method which involves use of a storage unit which stores a plurality of players by sorting them into any of a plurality of classes which are ranked in an order of a higher class to a lower class, said method comprising:

a matching step of receiving an instruction from a player and an instruction from another player, matching these players with each other in accordance with these instructions, and further storing a matching result of this match in said storage unit;
an interchanging step of checking the stored matching result in order for players sorted in a same class to be compared with each other, and updating said storage unit such that a player who has achieved a higher result is re-sorted into a class higher than a current class, and a player who has achieved a lower result is re-sorted into a class lower than the current class;
an imitating step of generating an instruction which is to be provided in said matching step and which imitates an instruction given by a human player;
a matching step of, in a case where a predetermined player among the plurality of players (the predetermined player will hereinafter be referred to as "simulated player") is set to be one party of a match, receiving an instruction generated in said imitating step as an instruction from said simulated player; and
a sorting step of matching a player who has not yet been sorted into any class (such a player will hereinafter be referred to as "new player") with a simulated player in said matching step, and updating said storage unit such that the new player is sorted in any class depending on a matching result of this match.

**12.** A program for controlling a computer to function as:

a storage unit which stores a plurality of players by sorting them into any of a plurality of classes which are ranked in an order of a higher class to a lower class;
a matching unit which receives an instruction from a player and an instruction from another player, matches these players with each other in accordance with these instructions, and makes said storage unit further store a matching result of this match; and
an interchanging unit which checks the stored matching result in order to compare players sorted in a same class, and updates said storage unit by re-sorting a player who has achieved a higher result into a class higher than a current class and re-sorting a player who has achieved a lower result into a class lower than the current class,
wherein said program further controls:

said storage unit to further store a handicap set for different classes among the plurality of classes;
said matching unit to, in a case where players sorted in different classes are to be matched, adopt the stored handicap set for the different classes; and
said computer to function as a setting unit which updates the handicap set for the different classes based on the stored matching result in a manner to advantage a class which has achieved a lower matching result than that of the other class.

**13.** A program for controlling a computer to function as:

a storage unit which stores a plurality of players by sorting them into any of a plurality of classes which are ranked in a order of a higher class to a lower class;
a matching unit which receives an instruction from a player and an instruction from another player, matches these players with each other in accordance with these instructions, and makes said storage unit to further store a matching result of this match;

an interchanging unit which checks the stored matching result in order to compare players sorted in a same class, and updates said storage unit by re-sorting a player who has achieved a higher result into a class higher than a current class and re-sorting a player who has achieved a lower result into a class lower than the current class;
an imitating unit which generates an instruction which is to be provided to said matching unit and which imitates an instruction given by a human player;
a matching unit which, in a case where a predetermined player among the plurality of players (the predetermined player will hereinafter be referred to as "simulated player") is set to be one party of a match, receives an instruction generated by said imitating unit as an instruction from the simulated player; and
a sorting unit which makes said matching unit match a player who has not yet been sorted into any class (such a player will hereinafter be referred to as "new player") with a simulated player, and updates said storage unit by sorting the new player into any class depending on a matching result of the match.

**14.** A computer-readable information recording medium recording a program for controlling a computer to function as:

a storage unit which stores a plurality of players by sorting them into any of a plurality of classes which are ranked in an order of a higher class to a lower class;
a matching unit which receives an instruction from a player and an instruction from another player, matches these players with each other in accordance with these instructions, and makes said storage unit further store a matching result of this match; and
an interchanging unit which checks the stored matching result in order to compare players sorted in a same class, and updates said storage unit by re-sorting a player who has achieved a higher result into a class higher than a current class and re-sorting a player who has achieved a lower result into a class lower than the current class,
wherein said program further controls:
said storage unit to further store a handicap set for different classes among the plurality of classes;
said matching unit to, in a case where players sorted in different classes are to be matched, adopt the stored handicap set for the different classes; and
said computer to function as a setting unit which updates the handicap set for the different classes based on the stored matching result in a manner to advantage a class which has achieved a lower matching result than that of the other class.

**15.** A computer-readable information recording medium recording a program for controlling a computer to function as:

a storage unit which stores a plurality of players by sorting them into any of a plurality of classes which are ranked in a order of a higher class to a lower class;
a matching unit which receives an instruction from a player and an instruction from another player, matches these players with each other in accordance with these instructions, and makes said storage unit to further store a matching result of this match;
an interchanging unit which checks the stored matching result in order to compare players sorted in a same class, and updates said storage unit by re-sorting a player who has achieved a higher result into a class higher than a current class and re-sorting a player who has achieved a lower result into a class lower than the current class;
an imitating unit which generates an instruction which is to be provided to said matching unit and which imitates an instruction given by a human player;
a matching unit which, in a case where a predetermined player among the plurality of players (the predetermined player will hereinafter be referred to as "simulated player") is set to be one party of a match, receives an instruction generated by said imitating unit as an instruction from the simulated player; and
a sorting unit which makes said matching unit match a player who has not yet been sorted into any class (such a player will hereinafter be referred to as "new player") with a simulated player, and updates said storage unit by sorting the new player into any class depending on a matching result of the match.

FIG.1

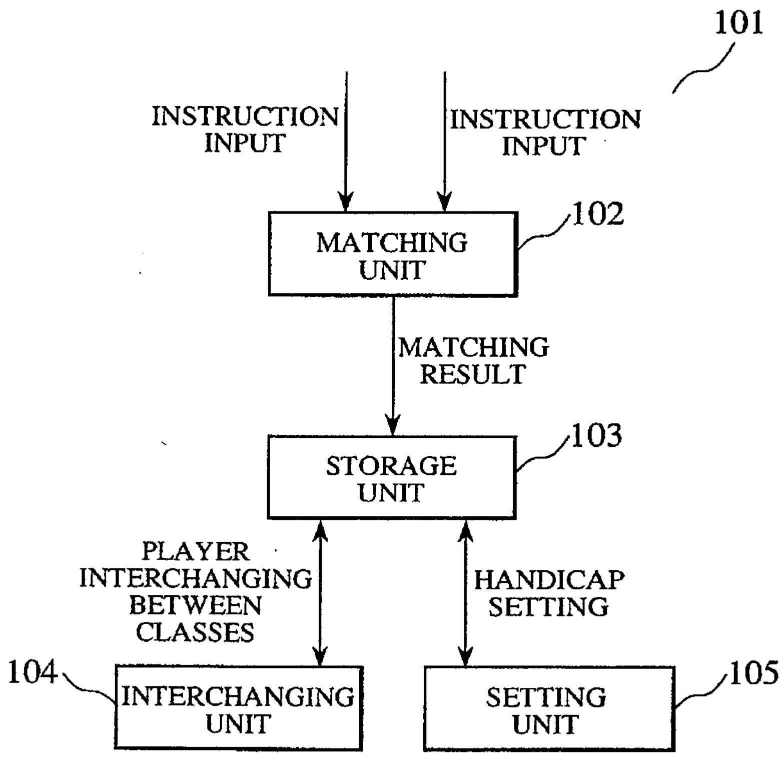
101
INSTRUCTION INPUT
INSTRUCTION INPUT
MATCHING UNIT
102
MATCHING RESULT
STORAGE UNIT
103
PLAYER INTERCHANGING BETWEEN CLASSES
HANDICAP SETTING
104
INTERCHANGING UNIT
SETTING UNIT
105

FIG.2

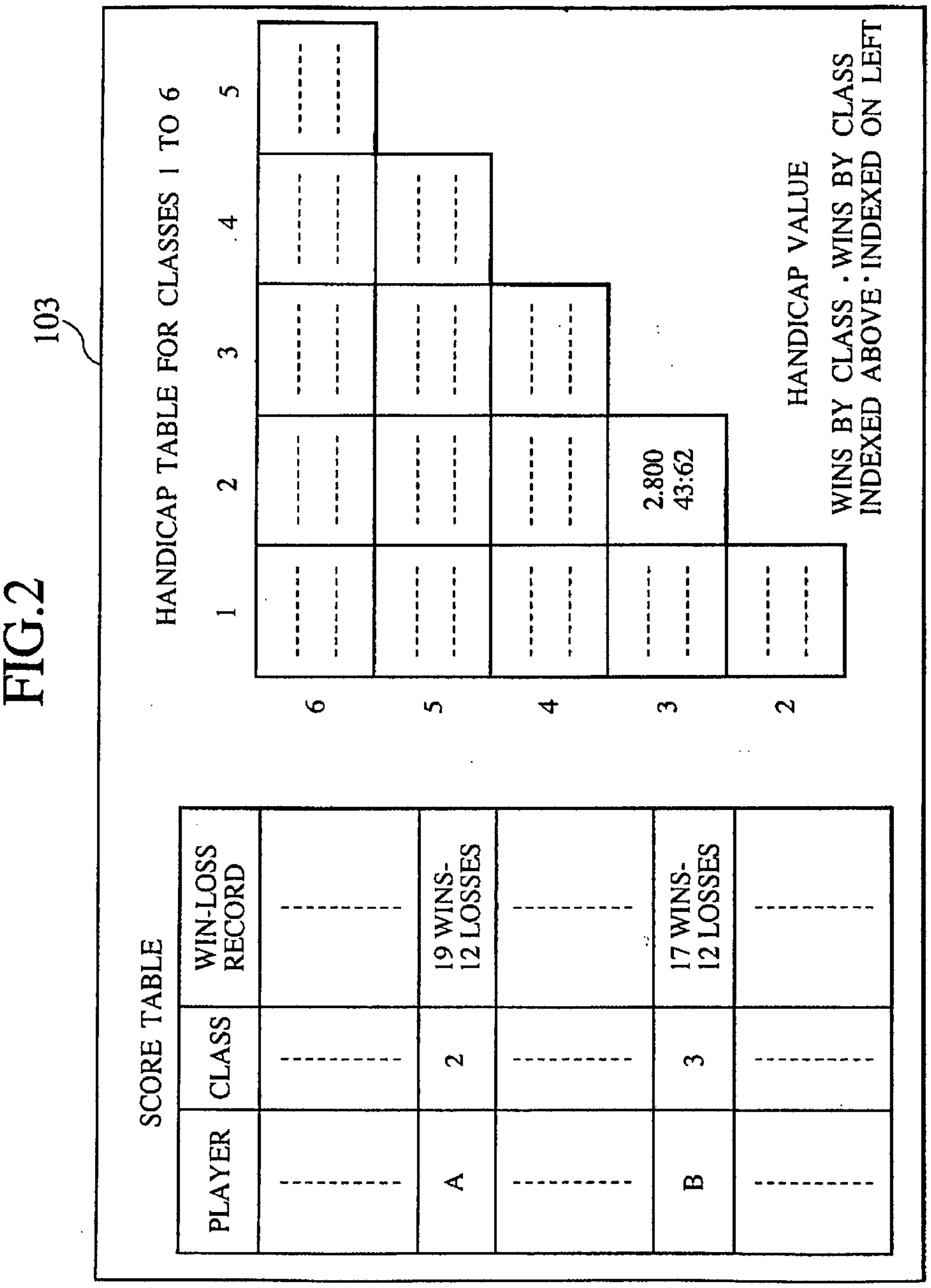
103
SCORE TABLE
PLAYER
CLASS
WIN-LOSS RECORD
A
2
19 WINS-12 LOSSES
B
3
17 WINS-12 LOSSES
HANDICAP TABLE FOR CLASSES 1 TO 6
1
2
3
4
5
6
5
4
3
2
2.800
43:62
HANDICAP VALUE
WINS BY CLASS · WINS BY CLASS
INDEXED ABOVE · INDEXED ON LEFT

FIG.3

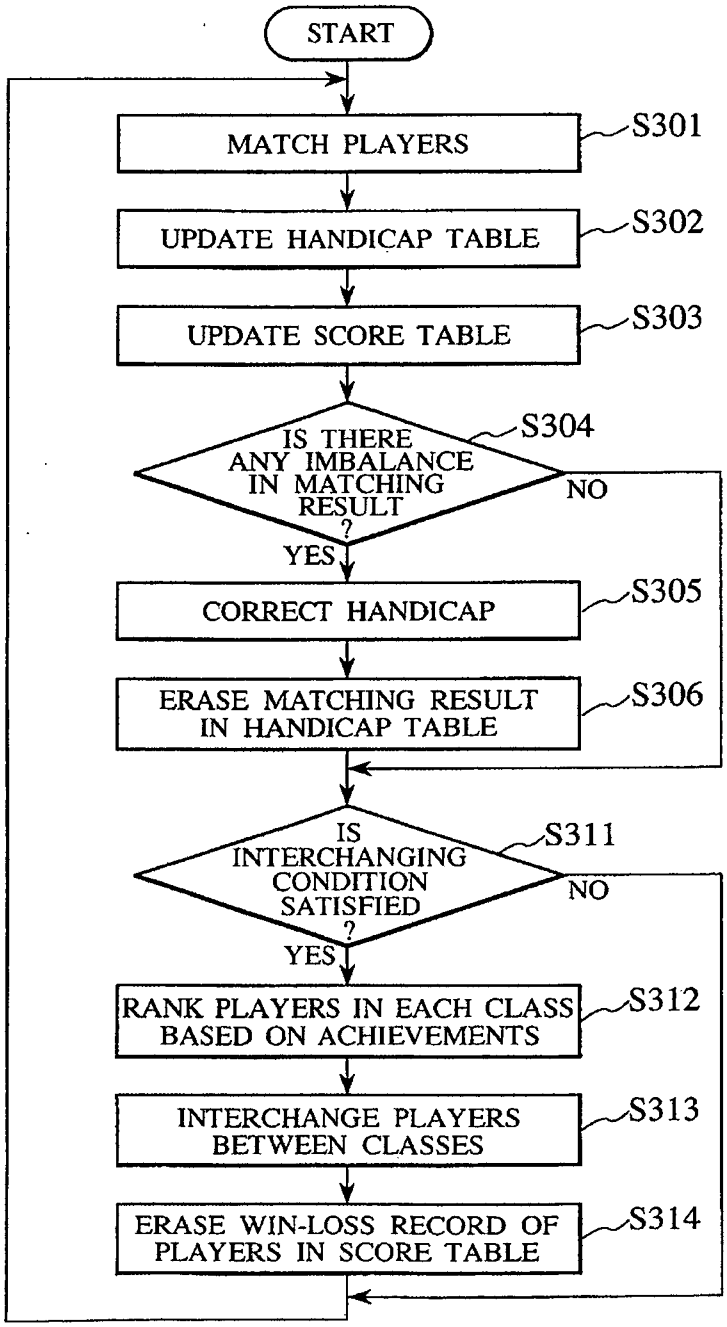
START
MATCH PLAYERS
S301
UPDATE HANDICAP TABLE
S302
UPDATE SCORE TABLE
S303
IS THERE ANY IMBALANCE IN MATCHING RESULT ?
S304
NO
YES
CORRECT HANDICAP
S305
ERASE MATCHING RESULT IN HANDICAP TABLE
S306
IS INTERCHANGING CONDITION SATISFIED ?
S311
NO
YES
RANK PLAYERS IN EACH CLASS BASED ON ACHIEVEMENTS
S312
INTERCHANGE PLAYERS BETWEEN CLASSES
S313
ERASE WIN-LOSS RECORD OF PLAYERS IN SCORE TABLE
S314

FIG.4

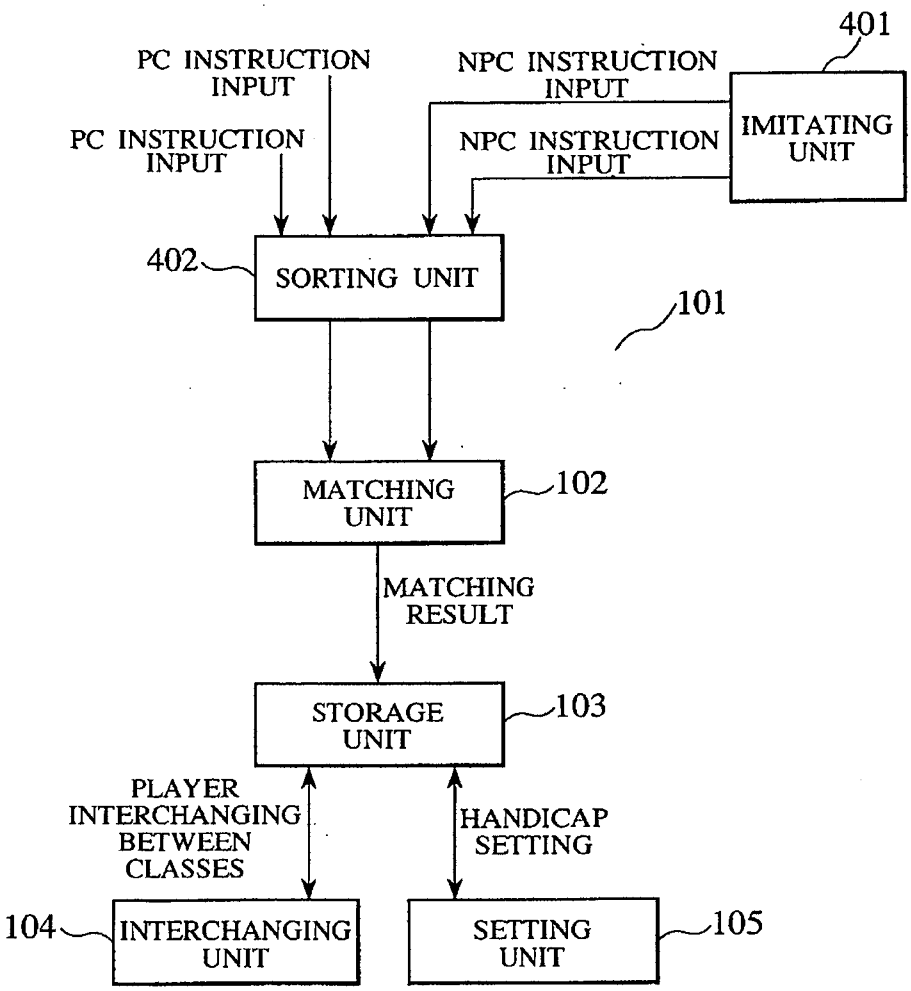
PC INSTRUCTION INPUT
PC INSTRUCTION INPUT
NPC INSTRUCTION INPUT
NPC INSTRUCTION INPUT
401
IMITATING UNIT
402
SORTING UNIT
101
MATCHING UNIT
102
MATCHING RESULT
STORAGE UNIT
103
PLAYER INTERCHANGING BETWEEN CLASSES
HANDICAP SETTING
104
INTERCHANGING UNIT
SETTING UNIT
105

**INTERNATIONAL SEARCH REPORT**

International application No.
PCT/JP2004/009430

A. CLASSIFICATION OF SUBJECT MATTER
Int.Cl[7] A63F9/00, A63F13/12

According to International Patent Classification (IPC) or to both national classification and IPC

B. FIELDS SEARCHED

Minimum documentation searched (classification system followed by classification symbols)
Int.Cl[7] A63F13/00-13/12, A63F9/00, A63F9/24, G06F17/60-19/00, A63B71/06

Documentation searched other than minimum documentation to the extent that such documents are included in the fields searched

| | | | |
|---|---|---|---|
| Jitsuyo Shinan Koho | 1922-1966 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2002-248276 A (Aruze Kabushiki Kaisha), 03 September, 2002 (03.09.02), Full text; all drawings & EP 1216733 A2 & US 2002/0082088 A1 | 4-5,11,13,15<br>1-3,6-10,12, 14 |
| Y<br>A | JP 2002-78843 A (Masatsugu OKADA), 19 March, 2002 (19.03.02), Par. Nos. [0005] to [0007], [0011] to [0013]; all drawings (Family: none) | 4-5,11,13,15<br>6-10,12,14 |
| A | JP 2003-47769 A (Konami Co., Ltd.), 18 February, 2003 (18.02.03), Par. Nos. [0130] to [0131]; Figs. 4, 7, 28 (Family: none) | 1-3,9-10,12, 14 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 August, 2004 (11.08.04) | 31 August, 2004 (31.08.04) |
| Name and mailing address of the ISA/ Japanese Patent Office | Authorized officer |
| Facsimile No. | Telephone No. |

Form PCT/ISA/210 (second sheet) (January 2004)

**INTERNATIONAL SEARCH REPORT**

International application No.
PCT/JP2004/009430

C (Continuation). DOCUMENTS CONSIDERED TO BE RELEVANT

| Category* | Citation of document, with indication, where appropriate, of the relevant passages | Relevant to claim No. |
|---|---|---|
| A | "Computer ha Shogi Meijin ni Kateruka-Pro-Kishi kara Mita 'Computer VS Ningenmeijin'", Joho Shori, Vol.39, No.9, Japan, Information Processing Society of Japan, 15 September, 1998 (15.09.98), page 873 | 9 |

Form PCT/ISA/210 (continuation of second sheet) (January 2004)